# FASCICULE DE BREVET EUROPEEN

(11) **EP 0 445 015 B1**
(45) Date de publication et mention de la délivrance du brevet: **20.05.1998**
(21) Numéro de dépôt: 91400500.4
(22) Date de dépôt: 25.02.1991
(51) Int. Cl.: H02P 7/20

(54) **Dispositif de commutation de vitesse pour moteur électrique**
Geschwindigkeitskommutationsvorrichtung für einen elektrischen Motor
Speed commutation device for an electric motor

(30) Priorité: 26.02.1990 FR 9002359
(43) Date de publication de la demande: 04.09.1991
(73) Titulaire: VALEO THERMIQUE MOTEUR, 78320 Le Mesnil Saint-Denis (FR)
(72) Inventeur: Msihid, Marcel, F-75019 Paris (FR)
(74) Mandataire: Gamonal, Didier

(56) Documents cités:
- EP-A- 0 076 206
- FR-A- 1 450 247
- FR-A- 2 605 156
- GB-A- 1 393 705

## Description

La présente invention concerne un dispositif de commutation de vitesse pour moteur électrique. Elle trouve application en particulier dans les groupes motoventilateurs utilisés dans l'automobile et comportant un moteur électrique entrainant une hélice de ventilateur.

La température du moteur thermique d'une automobile varie selon diverses conditions. Ainsi, sur des routes escarpées, dans un environnement chaud, le moteur thermique a tendance à dégager beaucoup de chaleur. Pour le refroidir, il est utilisé un fluide caloporteur qui parcoure le moteur et qui évacue les calories récupérées vers l'extérieur et plus particulièrement après avoir traversé un échangeur de chaleur parcouru par un flux d'air de refroidissement, généralement de l'air extérieur, ce flux d'air pouvant être accéléré, de façon à obtenir un grand débit, par l'hélice d'un ventilateur entraîné par un moteur électrique à courant continu, l'ensemble (hélice et moteur électrique) étant dénommé groupe motoventilateur.

L'alimentation en courant électrique du moteur électrique est fournie par la batterie et l'alternateur embarqués du véhicule, et est commandé par l'intermédiaire d'un circuit de commande électrique qui permet de réguler la température du moteur.

En particulier, un débit d'air de refroidissement de valeur relativement faible est exigé en fonctionnement normal. Dans la majorité des cas, on sait déjà obtenir un fonctionnement silencieux d'une telle installation.

Cependant, en fonctionnement extrême, il est parfois nécessaire d'augmenter le flux d'air utile au refroidissement des parties chaudes du moteur thermique qui mobilise l'automobile. Le groupe motoventilateur va donc recevoir une commande destinée à augmenter le débit d'air de refroidissement. En contrepartie, le bruit dégagé par ce groupe motoventilateur est important, ce qui nuit à l'habitabilité du véhicule.

Les moteurs électriques équipant les groupes motoventilateurs sont des moteurs à flux constant dans lesquels la vitesse de rotation du moteur ne dépend pas du couple résistant dans une large gamme de valeurs. De tels moteurs sont peu encombrants, peu consommateurs de courant et ont un prix de revient relativement faible.

De ce fait, d'ailleurs, l'application de l'électronique de contrôle de l'art antérieur ne se fait pas facilement, car le coût peu élevé du moteur exige aussi que la commande de sa vitesse de rotation soit peu couteuse.

C'est un objet de l'invention de fournir un moyen de commande de la vitesse du moteur électrique à flux constant qui soit peu couteux.

Dans l'application principale pour laquelle l'invention est prévue, les moteurs thermiques des automobiles n'atteignent que rarement des températures élevées. Dans l'art antérieur, on a déjà proposé des dispositifs de commande qui permettent d'obtenir deux vitesses de rotation du moteur électrique du groupe motoventilateur.

De tels dispositifs de commutation comportent en général une résistance électrique qui est mise en circuit à petite vitesse et est destinée à réduire la tension aux bornes d'au moins un balai d'alimentation de l'induit du moteur électrique. Cette réduction de tension a pour effet de réduire la vitesse de rotation du moteur d'une vitesse nominale à une vitesse plus faible.

Ces dispositifs de l'art antérieur présentent deux inconvénients principaux :
- tout d'abord, la résistance électrique est un composant relativement coûteux dont le prix correspond à peu près à 30 % du coût du dispositif de commutation ;
- d'autre part, en fonctionnement modéré du véhicule, afin de ne pas aggraver le bilan thermique à cause de la résistance, on demande en général que cette résistance soit disposée dans un flux d'air de direction déterminée, ce qui est rendu difficile par l'encombrement des réceptacles où sont installés les groupes moto-ventilateurs.

On a également proposé, notamment dans le document EP-A-0 076 206, des dispositifs de commande de vitesses de moteur électrique du type à bobinage imbriqué alimenté par l'intermédiaire de quatre balais

Grâce à ces dispositifs, pour obtenir deux vitesses de rotation dans le même sens de rotation, il suffisait d'alimenter deux balais pour obtenir une première vitesse, dite petite vitesse, et, pour obtenir une grande vitesse, il est nécessaire de garder l'alimentation de l'un des balais utilisé pour obtenir le petite vitesse et d'alimenter un autre des balais restants.

Comme mieux expliqué dans EP-A-0 076 206, la combinaison des trois balais avec un quatrième permet d'obtenir deux sens de rotation avec chaque fois deux vitesses de rotation différentes.

La Demanderesse a pu constater que le dispositif de l'Art Antérieur présentait un inconvénient non négligeable.

En effet, disposant d'un moteur équipé de quatre balais, il ne pouvait être utilisé que trois de ceux-ci pour régler les différentes vitesse et l'utilisation simultanée des balais risquait d'entraîner un dommage au moteur électrique.

La présente invention apporte remède à ces inconvénients de l'art antérieur.

En effet, l'invention concerne un dispositif de commutation de vitesse de moteur électrique équipant un groupe moto-ventilateur, ce moteur étant du type à bobinage imbriqué alimenté par l'intermédiaire d'au moins quatre balais et étant commandé de telle sorte qu'il puisse tourner, dans un seul sens de rotation, à au moins deux vitesses différentes, et se caractérise en ce que le dispositif de commutation de vitesse comporte un contacteur à au moins deux positions par l'intermédiaire duquel, dans la première position de ce contacteur, au plus trois balais sont alimentés en courant électrique pour obtenir une première vitesse du moteur, dite petite vitesse, et, dans la deuxième position dudit contacteur, tous les balais sont alimentés en courant électrique pour obtenir la plus grande vitesse du moteur, dite grande vitesse.

La présente invention sera mieux comprise au moyen de la description et des dessins annexés qui sont :
- la figure 1, le schéma d'un dispositif de commutation de vitesse selon l'art antérieur,
- la figure 2, le schéma d'un dispositif de commutation de vitesse selon un premier mode de réalisation de l'invention,
- la figure 3, le schéma d'un dispositif de commutation de vitesse selon un second mode de réalisation de l'invention ;
- la figure 4, le schéma d'un dispositif de commutation de vitesse selon un troisième mode de réalisation de l'invention
- la figure 5, le schéma d'un dispositif de commutation de vitesse selon un quatrième mode de réalisation de l'invention.

Dans les figures annexées, on a représenté un moteur tétrapolaire disposant de quatre balais d'alimentation en courant continu de l'induit. Il est entendu que l'invention ne se limite pas à un nombre déterminé de pôles pour ce genre de machines à courant continu à flux constant.

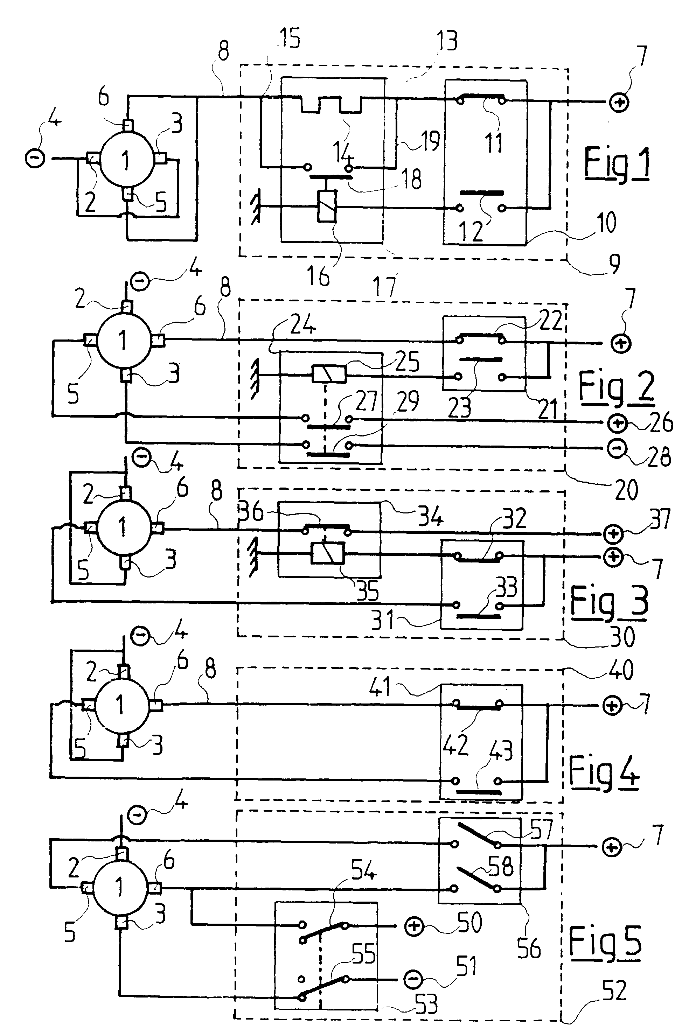

A la figure 1, on a représenté un dispositif de commutation de vitesse selon l'art antérieur. Un moteur tétrapolaire à flux constant, référencé 1, comporte un premier balai 2 et un second balai 3 connectés à au moins une source d'alimentation de polarité négative 4.

Deux autres balais respectivement 5 et 6 sont connectés à la polarité positive 7 de la source d'alimentation en courant continu précitée.

Sur la ligne 8 de connexion entre les balais 5 et 6 et la borne positive de l'alimentation 7, on interpose un dispositif de commutation de vitesse référencé 9.

Dans l'application à un groupe motoventilateur, le dispositif de commutation est asservi à une mesure de l'environnement thermique. Ainsi qu'on l'a déjà décrit, le ventilateur du groupe est destiné à modérer au moins une caractéristique de cet environnement comme la température du bloc moteur.

A cet effet, on utilise un thermocontact 10 à deux positions 11 et 12 destinées :
- la première 11 à régler le moteur 1 sur une allure dite petite vitesse et
- la seconde 12 à régler le moteur 1 sur une allure dite grande vitesse, en fait la vitesse nominale du moteur tétrapolaire à flux constant 1.

On connecte une première borne 13 d'une résistance électrique 14 sur l'interrupteur 11 du thermocontact 10, et sa seconde borne 15 est connectée par la ligne 8 aux balais 5 et 6 de polarité positive du moteur tétrapolaire 1.

En fonctionnement dans des conditions thermiques modérées, la résistance 14 est parcourue par le courant destiné aux enroulements connectés aux balais 5 et 6 de l'induit. De ce fait, une fraction du courant est consommée par effet Joule dans la résistance 14. La chute de tension aux bornes de la résistance entraîne un affaiblissement du couple moteur et, pour un couple mécanique résistant donné, une diminution de la vitesse de rotation du moteur par rapport à sa vitesse nominale.

Quand les conditions thermiques mesurées atteignent une certaine valeur, le thermocontact 10 déclenche un second commutateur 12 qui vient activer la bobine électromagnétique 16 d'un relais 17 dont le contact 18 vient réaliser un court-circuit de la résistance 14. De ce fait, le courant appelé par les balais 5 et 6 sur le pôle 7 de la source d'alimentation continue traverse la ligne 19 de court-circuit de la résistance et la tension aux bornes des balais 5 et 6 est restaurée à sa valeur nominale.

De ce fait, on retrouve une alimentation équilibrée des quatre pôles du moteur et un fonctionnement en régime nominal de celui-ci. Le groupe motoventilateur atteint sa pleine vitesse de façon à modérer l'environnement thermique désiré.

Afin de porter remède aux inconvénients précités de l'art antérieur, la présente invention permet d'éviter le recours à une résistance électrique coûteuse et dont la localisation dans l'ensemble est difficile à réaliser.

A la figure 2, on a représenté un premier mode de réalisation de la présente invention. Selon l'invention, le moteur tétrapolaire 1 de la figure 2 comporte des balais respectivement 2, 3, 5 et 6. Le seul balai 2 est connecté au pôle négatif 4 de la source d'alimentation en courant continu. Dans un mode préféré de réalisation, le moteur électrique à courant continu à flux constant utilisé est un moteur à induit dont les bobinages sont imbriqués.

Le balai 6 est connecté par la ligne 8 au pôle positif 7 de la source d'alimentation en courant continu. Sur la ligne 8 est interposé un dispositif de commutation de vitesse 20 selon l'invention. Selon l'invention, le dispositif 20 comporte un thermocontact à deux positions 21 analogue au thermocontact 10 de la figure 1 et qui joue le même rôle que celui précité. Cependant le contact 22 est directement connecté par la ligne 8 au balai 6 sans passer par l'intermédiaire d'une résistance électrique.

Selon l'invention, le second contact 23 du thermocontact 21 est connecté à un relais 24 comportant une bobine électromagnétique 25 qui connecte, selon les conditions d'environnement, des alimentations d'une première polarité positive 26 connectée par l'intermédiaire du contact 27 au balai 5 et d'une seconde polarité négative 28 par l'intermédiaire du contact 29 au balai 3. Quand les conditions thermiques atteignent un premier seuil, le thermocontact 21 ferme son contact 22, le contact 23 étant ouvert. Le courant entre par le balai 6 et ressort par le balai 2 seulement ce qui provoque une réduction du couple moteur et, partant, une vitesse de rotation inférieure à la vitesse nominale. Les balais consécutifs 3 et 5 sont découplés de toute source d'alimentation.

Quand les conditions thermiques atteignent un second seuil prédéterminé, le thermocontact 21 ferme alors son contact 23 ce qui a pour effet de mettre en circuit simultanément les balais 5 à la polarité positive 26 et 3 à la polarité négative 28. Dans cette seconde position, l'ensemble des balais est alimenté en courant électrique de manière équilibrée, et on atteint ainsi la vitesse nominale du moteur ainsi qu'il est connu.

A la figure 3, on a représenté un second mode de réalisation de la présente invention. On a remarqué que dans le premier mode de réalisation de l'invention, on avait économisé la résistance électrique par rapport au dispositif équivalent de l'art antérieur. Cependant, on a été contraint d'ajouter un relais électromagnétique à deux contacts alors que le dispositif équivalent de l'art antérieur comportait un seul contact. Afin d'améliorer encore les possibilités de réduction de coût, la présente invention propose un montage selon lequel on utilise un relais à un seul contact comme selon l'art antérieur.

A cet effet, à la figure 3 comme dans le cas de l'art antérieur représenté à la figure 1, les balais 2 et 3 opposés, sont connectés à la polarité négative 4 de la source d'alimentation en courant continu. D'autre part, le balai 6 est connecté à une polarité positive 37 par l'intermédiaire du dispositif de commutation de vitesse 30 représenté à la figure 3.

Dans ce mode de réalisation, une polarité positive 7 d'une source d'alimentation en courant continu est connectée à un thermocontact 31 à deux niveaux déclenchant des contacteurs 32 et 33 comme il a été décrit aux figures 1 et 2 pour les références 10 et 21.

En fonctionnement en petite vitesse, le contact 32 du thermocontact 31 est fermé ce qui a pour effet d'alimenter la bobine 35 d'un relais 34 à un seul contact 36. Le contact 36 de ce relais 34 est fermé de même et la ligne 8 est connectée à la borne positive 37 d'une source d'alimentation en courant continu.

Dans le fonctionnement en grande vitesse, le thermocontact 31 déclenche le second contact 33 quand un seuil est détecté, ce qui a pour effet de fournir une alimentation positive 7 au balai 5. On constate ainsi qu'en fonctionnement en petite vitesse, du courant circule dans trois des balais d'alimentation 2, 3 et 6 de l'induit. Cependant, le balai alimenté par l'intermédiaire de la ligne 8 est traversé par un courant égal à la somme de ceux qui passent dans les balais 2 et 3. De ce fait, le moteur fonctionne en petite vitesse dans un régime déséquilibré.

Dans un autre mode de réalisation représenté en figure 4, on s'est totalement affranchi non seulement de la résistance mais aussi du relais électromagnétique.

Pour cela, les balais 2 et 3 sont connectés à la polarité négative 4 de la source d'alimentation en courant continu et les balais 5 et 6 sont connectés à la polarité positive 7 par l'intermédiaire d'un dispositif de commutation de vitesse 40.

Ce dispositif de commutation 40 est constitué uniquement d'un thermocontact 41 à deux contacts 42,43.

Ainsi en fonctionnement et à petite vitesse, le contact 42 du thermocontact 41 est fermé et le balai 6 est connecté au pôle positif 7 par la ligne 8.

Dans le fonctionnement à grande vitesse, le thermocontact 41 déclenche le second contact 43 et le balai 5 est également connecté au pôle positif 7.

De ce fait en petite vitesse, le courant traverse les balais 2,3 et 6 alors qu'à grande vitesse le courant passe dans tous les balais d'alimentation de l'induit.

Dans le mode de réalisation de la figure 5, le balai 2 est connecté directement à la polarité négative 4, le balai 6 peut être connecté soit à une polarité positive 7 soit à une polarité positive 50 alors que le balai 5 peut être connecté à la polarité positive 7 et le balai 3 peut être connecté à une polarité négative ; ces divers possibilités de connexion se faisant par l'intermédiaire d'un dispositif de commutation 52.

Le dispositif de commutation comprend un premier élément de commutation 53 permettant de relier le balai 6 à la polarité positive 50 par un contact 54 tout en déconnectant le balai 3 de la polarité négative 51 par un contact 55 et un second élément de commutation 56 permettant de relier les balais 5 et 6 à la polarité positive 7 par des contacts 57,58.

Ces deux éléments de commutation 53-56 sont prévus pour fonctionner dans une configuration dans laquelle lorque l'un de ces éléments est actionné, l'autre est relâché.

Ainsi pour la petite vitesse l'élément de commutation 53 est actionné de façon à ce que l'alimentation du balai 6 soit effectuée par le contact 54 tout en déconnectant le balai 3 de la polarité négative 51 par le contact 55, le courant pouvant ainsi uniquement du balai 6 vers le balai 4.

Pour la grande vitesse, l'élément de commutation 53 est ramené à son état initial visible sur la figure 5 dans lequel le balai 6 n'est plus alimenté pour la polarité positive 50 et le balai 3 est connecté à la polarité négative 51 par le contact 55, puis l'élément de commutation 56 est actionné de manière à ce que les contacts 57 et 58 permettent de relier simultanément les balais 5 et 6 à la polarité 7, le courant prenant ainsi dans les quatre balais.

Dans un autre mode de réalisation de l'invention, les contacts électromagnétiques et le thermocontact sont remplacés par des commutateurs ou interrupteurs à semiconducteurs. Ce sont des transistors de puissance fonctionnant en commutation qui fonctionnent de façon sensiblement équivalente à celle décrite ci-dessus.

L'invention permet ainsi de s'adapter notamment à de l'Electronique centralisée, en se déclenchant par un bus de signaux embarqués. De même, l'état du groupe moto ventilateur peut être surveillé.

L'invention peut se transposer dans d'autres domaines que celui des Groupes Moto Ventilateurs pour l'automobile. En particulier, le thermocontact peut être remplacé par tout interrupteur commandé convenable. L'invention peut recourir à plusieurs sources d'alimentation en courant continu et même se cumuler avec des tensions ajustables en fonction des points de consigne.

D'une manière générale, les moteurs électriques explicités dans l'invention comportent un induit qui comporte plusieurs voies alimentées par l'intermédiaire de balais.

Le moyen d'annulation du dispositif selon l'invention comporte au moins un interrupteur semiconducteur commandable comme un transistor de commutation polarisé en état ouvert de façon à ouvrir ou fermer selectivement la connexion d'au moins un balai de l'induit à sa polarisation normale.

## Revendications

1. Dispositif de commutation de vitesses de moteur électrique équipant un groupe moto-ventilateur, ce moteur étant du type à bobinage imbriqué alimenté par l'intermédiaire d'au moins quatre balais (2,3,5,6) et étant commandé de telle sorte qu'il puisse tourner, dans un seul sens de rotation, à au moins deux vitesses différentes, caractérisé en ce que le dispositif de commutation de vitesse (20,30,40,52) comporte un contacteur à au moins deux positions (21,31,41,53,57) par l'intermédiaire duquel, dans la première position de ce contacteur, au plus trois balais (2,3,5,6) sont alimentés en courant électrique pour obtenir une première vitesse du moteur, dite petite vitesse, et, dans la deuxième position dudit contacteur, tous les balais sont alimentés en courant électrique pour obtenir la plus grande vitesse du moteur, dite grande vitesse.

2. Dispositif selon la revendication 1, caractérisé en ce que le contacteur (21,31) comporte au moins deux contacts enclenchables successivement (22,23,32,33) dont l'un des contacts (23,32) est connecté à un relais électromagnétique (24,34) permettant d'alimenter au moins un balai (2,3,5,6) non encore sous tension.

3. Dispositif selon la revendication 2, caractérisé en ce que le contact (32) est relié à la bobine (35) du relais (34) qui comporte un contact (36) enclenchable par ladite bobine de manière à alimenter au plus trois balais (2,3,6).

4. Dispositif selon la revendication 2 ou 3, caractérisé en ce que le contact (23) est relié à la bobine (25) du relais (24) qui comporte deux contacts (27,29) enclenchables par ladite bobine de manière à alimenter deux balais (3,5).

5. Dispositif selon la revendication 1, caractérisé en ce que le contacteur (53) est associé à au moins un autre contacteur (56) pour obtenir une alimentation du courant continu de tous les balais (2,3,5,6).

6. Dispositif selon la revendication 5, caractérisé en ce que l'autre contacteur (56) est un contacteur à deux contacts (57,58) enclenchables simultanément.

7. Dispositif selon l'une des revendications précédentes, caractérisé en ce que le contacteur (21,31,41,53,56) et/ou le relais (24,34) est un interrupteur semiconducteur.

8. Dispositif selon l'une des revendications précédentes, caractérisé en ce que le contacteur (21,31,41,53,56) est asservi à une mesure des conditions d'environnement thermique.

## Patentansprüche

1. Geschwindigkeitskommutationsvorrichtung für einen elektrischen Motor, mit dem ein Lüftersatz ausgerüstet ist, wobei dieser Motor mit einer überlappenden Wicklung ausgeführt ist, deren Stromversorgung über mindestens vier Bürsten (2, 3, 5, 6) erfolgt, und so gesteuert wird, daß er in einer einzigen Drehrichtung mit mindestens zwei Geschwindigkeiten laufen kann, **dadurch gekennzeichnet**, daß die Geschwindigkeitskommutationsvorrichtung (20, 30, 40, 52) ein Schaltglied mit mindestens zwei Positionen (21, 31, 41, 53, 57) umfaßt, über das in einer ersten Position dieses Schaltglieds höchstens drei Bürsten (2, 3, 5, 6) mit elektrischem Strom versorgt werden, um eine als niedrige Geschwindigkeit bezeichnete erste Geschwindigkeit des Motors zu erzielen, während in der zweiten Position des besagten Schaltglieds alle Bürsten mit elektrischem Strom versorgt werden, um die als hohe Geschwindigkeit bezeichnete höhere Geschwindigkeit des Motors zu erzielen.

2. Vorrichtung nach Anspruch 1 , **dadurch gekennzeichnet**, daß das Schaltglied (21, 31) mindestens zwei nacheinander einschaltbare Kontakte (22, 23, 32, 33) umfaßt, wobei einer der Kontakte (23, 32) an ein elektromagnetisches Relais (24, 34) angeschlossen ist, das die Stromversorgung mindestens einer noch nicht unter Spannung stehenden Bürsten (2, 3, 5, 6) ermöglicht.

3. Vorrichtung nach Anspruch 2 , **dadurch gekennzeichnet**, daß der Kontakt (32) mit der Spule (35) des Relais (34) verbunden ist, das einen durch die besagte Spule einschaltbaren Kontakt (36) umfaßt, um höchsten drei Bürsten (2, 3, 6) mit Strom zu versorgen.

4. Vorrichtung nach Anspruch 2 oder 3 , **dadurch gekennzeichnet**, daß der Kontakt (23) mit der Spule (25) des Relais (24) verbunden ist, das zwei durch die besagte Spule einschaltbare Kontakte (27, 29) umfaßt, um zwei Bürsten (3, 5) mit Strom zu versorgen.

5. Vorrichtung nach Anspruch 1 , **dadurch gekennzeichnet**, daß das Schaltglied (53) mit mindestens einem anderen Schaltglied (56) verbunden ist, um eine Gleichstromversorgung aller Bürsten (2, 3, 5, 6) zu erzielen.

6. Vorrichtung nach Anspruch 5 , **dadurch gekennzeichnet** , daß das andere Schaltglied (56) ein Schaltglied mit zwei gleichzeitig einschaltbaren Kontakten (57, 58) ist.

7. Vorrichtung nach einem der vorangehenden Ansprüche, **dadurch gekennzeichnet**, daß das Schaltglied (21, 31, 41, 53, 56) und/oder das Relais (24, 34) ein Halbleiterschalter ist.

8. Vorrichtung nach einem der vorangehenden Ansprüche, **dadurch gekennzeichnet**, daß das Schaltglied (21, 31, 41, 53, 56) nach einem Meßwert der thermischen Umgebungsbedingungen gesteuert wird.

## Claims

1. A speed changing device for an electric motor of a motorised blower unit, the motor being of the encapsulated winding type supplied through at least four brushes (2, 3, 5, 6) and being controlled in such a way that it is able to rotate, in only one direction of rotation, at at least two different speeds, characterised in that the speed changing device (20, 30, 40, 52) includes a contactor with at least two positions (21, 31, 41, 53, 57), through which, in the first position of the said contactor, three brushes (2, 3, 5, 6) at most are supplied with electric current so as to obtain a first motor speed, referred to as the slow speed, and, in the second position of the said contactor, all of the brushes are supplied with electric current so as to obtain the highest speed of the motor, referred to as high speed.

2. A device according to Claim 1, characterised in that the contactor (21, 31) has at least two contacts which are arranged to be closed in succession (22, 23, 32, 33), in which one of the contacts (23, 32) is connected to an electromagnetic relay (24, 34) which enables power to be supplied to at least one brush (2, 3, 5, 6) not already under a voltage.

3. A device according to Claim 2, characterised in that the contact (32) is connected to the winding (35) of the relay (34), which includes a contact (36) that can be closed by the said winding in such a way as to supply power to three brushes (2, 3, 6) at most.

4. A device according to Claim 2 or Claim 3, characterised in that the contact (23) is connected to the winding (25) of the relay (24), which includes two contacts (27, 29) that can be closed by the said winding so as to supply power to two brushes (3, 5).

5. A device according to Claim 1, characterised in that the contactor (53) is associated with at least one further contactor (56) so as to obtain a continuous current supply for all the brushes (2, 3, 5, 6).

6. A device according to Claim 5, characterised in that the further contactor (56) is a contactor having two contacts (57, 58) which are arranged to be closed simultaneously.

7. A device according to one of the preceding Claims, characterised in that the contactor (21, 31, 41, 53, 56) and/or the relay (24, 34) is a semiconductor interruptor.

8. A device according to one of the preceding Claims, characterised in that the contactor (21, 31, 41, 53, 56) is responsive to a measurement of thermal environmental conditions.
